# EUROPEAN PATENT SPECIFICATION

(11) **EP 1 669 135 B1**
(45) Date of publication and mention of the grant of the patent: **16.02.2011**
(21) Application number: 05025892.0
(22) Date of filing: 28.11.2005
(51) Int. Cl.: B01J 35/10, B01J 35/04, B01J 37/02, B01J 23/40, B01J 23/63, B01D 53/00

(54) **Exhaust gas purification catalyst**
Abgasreinigungskatalysator
Catalyseur de purification de gaz d'échappement

(30) Priority: 10.12.2004 JP 2004358534
(43) Date of publication of application: 14.06.2006
(73) Proprietor: Mazda Motor Corporation, Aki-gun, Hiroshima 730-8670 (JP)
(72) Inventor: Miyoshi, Seiji Mazda Motor Corp., Hiroshima-ken, 730-8670 (JP); Takami, Akihide Mazda Motor Corp., Hiroshima-ken, 730-8670 (JP); Yamada, Hiroshi Mazda Motor Corp., Hiroshima-ken, 730-8670 (JP); Akamine, Massaki Mazda Motor Corp., Hiroshima-ken, 730-8670 (JP); Iwakuni, Hideharu Mazda Motor Corp., Hiroshima-ken, 730-8670 (JP); Harada, Koichiro Mazda Motor Corp., Hiroshima-ken, 730-8670 (JP)
(74) Representative: Müller-Boré & Partner Patentanwälte

(56) References cited:
- EP-A- 1 175 935
- EP-A- 1 479 651
- EP-A- 1 498 181
- PATENT ABSTRACTS OF JAPAN vol. 2002, no. 05, 3 May 2002 (2002-05-03) & JP 2002 001120 A (TOYOTA CENTRAL RES & DEV LAB INC), 8 January 2002 (2002-01-08)

## Description

This invention relates to an exhaust gas purification catalyst converter.

As the catalyst for purifying exhaust gas from an internal combustion engine, it is common to use precious metals such as Pt, Pd or Rh which is loaded on an oxide powder such as alumina that is referred to as support material. Alternatively ceria may be adopted as the support material as well considering its oxygen storage capacity. Further, catalyst layers having the support materials may consist of two layers as shown in U.S. Patent no. 5,019,546 or Japanese Patent Application Publication no. S63-258648.

It is also known to use a hollow oxide powder as the support material in order to enhance the catalyst performance as shown in Japanese Patent Application Publication nos. 2000-203830 or 2001-347167. By using the hollow oxide powder as support material, the pore volume of the catalyst layer is increased thereby enhancing gas diffusion to improve the exhaust gas purification performance at high temperature.

Further, Japanese Patent Application Publication no. 2002-001120 shows that both of the hollow and solid oxide powders can be used as the support material. In the case of a multi layer structure of the support material, for enhancement of the gas diffusion, it is preferred to arrange the hollow oxide powder in a layer except for the lowermost layer among the multiple layers and it is particularly preferred to arrange it in the uppermost layer.

Such a hollow oxide powder is formed by gathering together or agglutinating super fine crystals of a size of several to tens of nanometers to produce spaces or voids of its shell wall where exhaust gas may pass through. However, there is a certain level of resistance against the exhaust gas flow. Accordingly, when the exhaust gas pressure is low, e.g. in an engine idle condition just after engine start, the improvement of exhaust gas purification performance by the gas diffusion can not be obtained enough. Especially, under cold engine start condition, the hollow oxide powder contained in the upper layer of catalyst functions as a heat insulator, thereby the heat transfer from the exhaust gas to the lower layer is deteriorated, and, also since heat is deprived further from the lower layer to the honeycomb-shaped carrier, the temperature raise of the lower layer is delayed which is disadvantageous in terms of activation of catalyst in cold start condition (light-off performance).

Therefore, the inventors herein have recognized the above-mentioned disadvantages and have developed a method to improve the catalyst containing the hollow oxide powder.

In view of the above, the technical problem underlying the present invention is to provide an exhaust gas purification catalyst converter which is suited to improve the exhaust gas purifying efficiency even under cold start conditions.

The solution to the above technical problem is achieved by providing the subject matter defined in the claims.

In one aspect of the present invention, the disadvantages of prior approaches are overcome by a catalyst converter for purification of exhaust gas from an internal combustion engine or the like as defined in claim 1. The catalyst converter comprises a carrier having exhaust gas passages therein,
a lower catalyst layer coated over said carrier and comprising sphere shaped hollow shells of oxide powder consisting of a ceria or alumina based oxide or a mixture thereof loaded with a catalytic metal comprising Pt and/or Pd; and
an upper catalyst layer coated over said lower catalyst layer, at least partly directly exposed to exhaust gas flowing in said exhaust gas passage and comprising a solid oxide powder loaded with a catalytic metal comprising Rh.

According to the first aspect of the invention, the upper catalyst layer directly receives heat from exhaust gas to quickly activate the catalytic material loaded on the upper layer. Simultaneously, the lower layer functions to prevent heat transfer to the carrier because of the thermal insulation effect of the hollow oxide powder. Eventually both of the functions may result advantageously in the improvement of low temperature activation of the catalyst converter as a whole.

According to a preferred embodiment, the upper catalyst layer which comprises a solid oxide powder loaded with a catalytic metal does not contain a hollow oxide powder.

However, if there are three catalyst layers or more, the hollow oxide powder may be contained in any one of the multiple layers except for the upper layer which is directly exposed to the exhaust gas.

According to claim 2 another catalytic converter is provided. It comprises a carrier having exhaust gas passages therein, an upstream lower catalyst layer coated over the carrier in a predetermined range from an upstream end of the carrier in an exhaust gas flow direction and comprising said oxide powder loaded with said catalytic metal, a downstream lower catalyst layer coated over the carrier downstream of the upstream lower catalyst layer and comprising said solid oxide powder loaded with said catalytic metal, and an upper catalyst layer coated over the upstream and downstream lower catalyst layers, directly or at least partly directly exposed to exhaust gas flowing in the exhaust gas passage and comprising said solid oxide powder loaded with said catalytic metal.

According to the second aspect of the invention, since the upstream end region of the catalyst converter first receives heat from the exhaust gas flowing through the exhaust gas passage and the hollow oxide powder is provided in the upstream lower layer which is within the predetermined range from the upstream end in the exhaust gas flow direction, the catalytic activity at the upstream lower layer is excited or increased and maintained by heat from an exhaust gas and its catalytic reaction and the region showing activity with effect of the catalytic heat is spreading downstream as the exhaust gas flows. At the same time, the invention reduces the use of a hollow oxide powder by using it only for the upstream lower layer, which results in cost reduction while enhancing the light off performance. The range of the lower layer with the hollow oxide powder may be only the proximity of the upstream end of the carrier, a range from the upstream end to a center part of the carrier in the direction of the exhaust gas flow, or a range from the upstream end beyond the center part to a downstream side.

The hollow oxide powder loaded with a catalytic metal can be produced by way of a process which is known to a person skilled in the art. As outlined above, a hollow oxide powder can be formed by gathering together or agglutinating super fine crystals of a size of several nanometers to tens of nanometers to produce spaces or voids of its shell wall where exhaust gas may pass through. However, the following process for producing the hollow oxide powder loaded with a catalytic metal is preferred.

The hollow oxide powder loaded with a catalytic metal is prepared by putting an appropriate resin powder, preferably polyvinyl butyral (PVB), having a particle size or diameter of preferably about 0.05 - 1.3 micrometer (µm) into an appropriate solvent, preferably a polyvinyl alcohol (PVA) solution, and stirring to get a solution, e.g. a PVB solution. This solution is added to the solid oxide powder loaded with a catalytic metal to prepare a mixed slurry. The ratio between the solution and the oxide powder loaded with a catalytic metal is for example such that the solution is about 60 mass % and the powder is about 40 mass %.

The mixed slurry is e.g. dropped into a receptacle containing a salt-containing solution, preferably a potassium chloride solution, using e.g. a funnel shaped dropping equipment to generate particles having preferably a sphere shaped form having the oxide powder loaded with a catalytic metal coated on a surface of the resin particles.

The particles may be deposited at the bottom of receptacle. Then, it is taken out, held at a predetermined temperature, preferably about 150 °C for about two hours in the air atmosphere to dry it out, and held at a calcination temperature, preferably about 500 °C for about two hours in the air atmosphere, for its calcination. After calcination, the resin, preferably PVB, is thermo-decomposed and burned out. Then hollow particles, i.e. sphere shaped hollow shells of the oxide loaded with a catalytic metal are obtained. Its particle size or diameter is preferably in a range of 0.05 - 1.3 µm.

In the present invention, the hollow oxide powder consists of a ceria and/or alumina based oxide. Further, it may be a composite oxide or a multiple oxide or a mixed oxide such as a Ce-Zr composite oxide or a La containing alumina. Also, the solid oxide powder may be a ceria and/or alumina based oxide. Further it may be a composite oxide such as a Ce-Zr composite oxide or a La containing alumina as well.

In the present invention, the hollow oxide powder in the lower layer is loaded witha catalytic metal comprising Pt and/or Pd. Also, the solid oxide powder in the upper layer carries a catalytic metal comprising Rh. Since the solid oxide powder carries Rh in the upper layer, the Rh catalyst in the upper layer promotes the steam reforming reaction or partial oxidizing reaction of a hydrocarbon in the exhaust gas to cause it to become a more active decomposed product such as H₂ and partially oxidized hydrocarbon, which is provided to the lower layer to enhance the catalytic reaction therein. Since that decomposed product of a hydrocarbon is smaller in size compared to the original hydrocarbon, it can more easily pass through the shell wall of the hollow oxide powder in the lower layer so as to take advantage of gas diffusion in the larger pore volume of the hollow oxide powder than that of the solid oxide powder. Further in a case that the Pd catalyst is loaded on the lower layer, the hydrocarbon, which might poison Pd, is purified or converted to a more reactive partly oxidized hydrocarbon at the upper layer, which may prevent deterioration of the Pd catalyst in the lower layer so as to enhance durability of the catalyst converter.

Further, in the above embodiment, when a Pt catalyst is loaded on the solid oxide powder of the upper layer in addition to the Rh catalyst, the oxidizing reaction of a high molecular hydrocarbon may be promoted at the upper layer by the Pt catalyst so as to improve the exhaust gas purification performance of the catalyst converter. The Pt catalyst may also increase the production of a partly oxidized hydrocarbon at the upper layer so as to enhance the reactivity of exhaust gas at the lower layer while preventing the HC poisoning (hydrocarbon poisoning) of the Pd catalyst in the lower layer as described above. Further, the Pt catalyst in the upper layer may promote the oxidizing reaction of a hydrocarbon as described above to form a local reducing atmosphere which may prevent oxidation of the Rh catalyst in the upper layer, that might deteriorate its catalytic reactivity in an oxidizing atmosphere.

There is further provided a process for producing an exhaust gas purification catalyst converter, in particular according to the invention or a preferred embodiment thereof, having a carrier having exhaust gas passages therein, comprising the steps of:
(a) providing a carrier,
(b) forming a lower catalyst layer which comprises sphere shaped hollow shells of oxide powder consisting of a ceria or alumina based oxide or a mixture thereof loaded with a catalytic metal comprising Pt and/or Pd on said carrier,
(c) forming an upper catalyst layer which comprises a solid oxide powder loaded with a catalytic metal comprising Rh on said lower catalyst layer such that the upper catalyst layer is at least partly directly exposed to exhaust gas flowing in said exhaust gas passage.

Even though it is particularly preferred to provide the lower catalyst layer directly on the carrier and to provide the upper catalyst layer as the outermost layer which is in contact with the exhaust gas flowing through the exhaust gas passages, it is also possible to provide one or more additional layers having e.g. catalytic and/or thermal insulation properties, e.g. between the carrier and the lower catalyst layer and/or between the lower catalyst layer and the upper catalyst layer.

The advantages described herein will be more fully understood by reading an example of an embodiment in which the invention is used, referred to herein as the Detailed Description, with reference to the drawings. It should be understood that even though embodiments are separately described, single features thereof may be combined to additional embodiments.
Figure 1 is a perspective view of a catalyst converter for exhaust gas purification in accordance with the present invention;
Figure 2 is a cross sectional view showing a portion of the catalyst shown in Figure 1;
Figure 3 is another cross sectional view showing a portion of the catalyst shown in Figure 1; and
Figure 4 is a cross sectional view showing hollow oxide powders contained in the lower layer of the catalyst in accordance with the present invention.

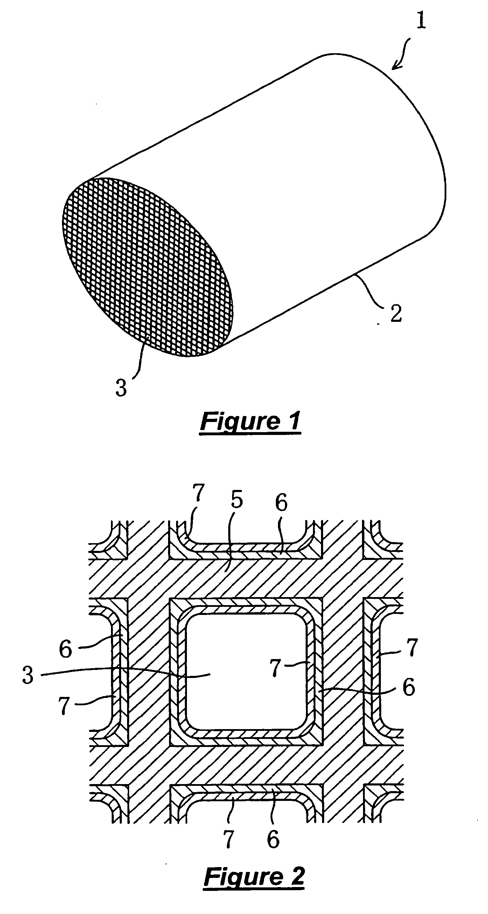

Figure 1 shows a catalyst converter for exhaust gas purification (three way catalyst) 1 arranged in an exhaust gas passage from an internal combustion engine of an automotive vehicle. The catalyst converter 1 has a porous monolithic carrier 2 having a honeycomb shaped cross section comprising a number of cells 3 forming exhaust gas passages.

With reference to Figure 2, catalyst layers are shown to be coated on surfaces of cell walls 5 of the carrier cells 3. The catalyst layers have preferably a dual layer structure with a lower layer 6 coated directly over the cell walls 5 and an upper layer 7 coated over the lower layer 6 and directly or partly or substantially fully directly exposed to exhaust gas flowing in the cell (exhaust gas passage) 3.

In other words, the exhaust gas purification catalyst converter according to the present invention has at least two catalyst layers comprising a lower catalyst layer 6 coated preferably directly over the cell walls 5 and an upper catalyst layer 7 coated preferably over the lower catalyst layer 6 and directly or partly or substantially fully directly exposed to exhaust gas flowing in the cell (exhaust gas passage) 3.

The lower layer 6 contains a ceria and/or alumina based hollow oxide powder loaded with said catalytic metal. On the other hand, the upper layer 7 contains a solid oxide powder loaded with said catalytic metal. The lower layer may contain, in addition to the hollow oxide powder, a solid oxide powder loaded with a catalytic metal.

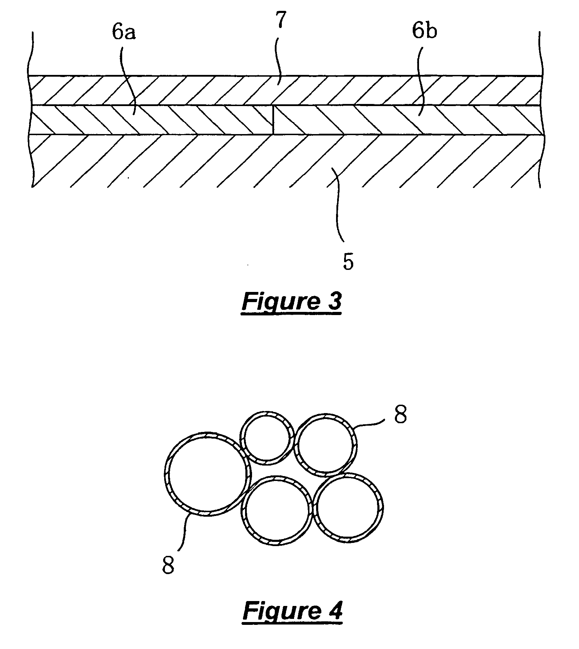

Figure 3 shows an embodiment in which the ceria and/or alumina based hollow oxide powder loaded with a catalytic metal is arranged in an upstream lower layer 6a in an exhaust gas flow direction of the carrier 2 while a solid oxide powder loaded with said catalytic metal is arranged in the downstream lower layer 6b.

Hereinafter, catalysts of examples according to the present invention and comparative examples will be described.

### Catalyst of Example 1-1

### - Composition of Catalyst -

This example is one where a solid Zr-Ce composite oxide loaded with Rh is arranged in the upper layer 7 over the entire length of the carrier 2 while a hollow La containing alumina powder loaded with Pt is arranged in the lower layer 6 over the entire length of the honeycomb shaped carrier 2.

The solid Zr-Ce composite oxide powder loaded with Rh of the upper layer carries Rh on a solid Zr-Ce composite oxide powder having a mass ratio of ZrO₂/CeO₂ being 75/25. The carrying amount of this Zr-Ce composite oxide (carrying amount per one liter of the carrier 2, hereinafter the same definition is applied) is 50 grams per liter (g/L) and the Rh carrying amount is 0.15 g/L.

The hollow La containing alumina powder loaded with Pt in the lower layer is made by using a solid La containing alumina powder loaded with Pt and forming it into a shape of a hollow shell 8 as shown in Figure 4. The La/Al molar ratio of the La containing alumina is 5/100 and the carrying amount of the La containing alumina is 50 g/L and the Pt carrying amount is 0.45 g/L.

### - Preparation of a Hollow Oxide Powder -

Preferably, the hollow La containing alumina powder loaded with Pt is prepared as described below. A powder of e.g. polyvinyl butyral (PVB) having a particle size or diameter of preferably about 0.05 - 1.3 micrometer (µm) is put into e.g. polyvinyl alcohol (PVA) solution and is stirred to get a PVB solution. This PVB solution is added to the solid La containing alumina powder loaded with Pt to prepare a mixed slurry. The ratio between the PVB solution and the La containing alumina powder loaded with Pt is for example such that the PVB solution is about 60 mass % and the powder is about 40 mass %.

The mixed slurry is dropped into a receptacle containing a potassium chloride solution using funnel shaped dropping equipment to generate a sphere shaped particle which has the La containing alumina powder loaded with Pt coated on a surface of the PVB particles.

The sphere shaped particles are deposited at the bottom of receptacle. Then, it is taken out, held at about 150 °C for about two hours in the air atmosphere to dry it out, and held at about 500 °C for about two hours in the air atmosphere for its calcination. After the calcination, PVB is thermo-decomposed and burned out, then sphere shaped hollow shells of the La containing alumina loaded with Pt are obtained. Its particle size or diameter is in a level of 0.05 - 1.3 µm.

### - Preparation of Catalyst (Coating of Catalyst material over Carrier) -

The hollow La containing alumina powder loaded with Pt (as prepared above) is mixed with a binder and water to prepare a slurry, into which the honeycomb shaped carrier is dipped. Then the carrier is pulled up and excess slurry is removed by blowing air to it. After that, the carrier is dried at about 150 °C in the air atmosphere for two hours and calcined at about 500 °C for two hours to form the lower layer.

The solid Zr-Ce composite oxide powder loaded with Rh as described above is mixed with a binder and water to prepare a slurry, into which the honeycomb shaped carrier coated with the hollow La containing alumina powder loaded with Pt (as prepared above) is dipped. Then the carrier is pulled up and excess slurry is removed by blowing air to it. After that, the carrier is dried at about 150 °C in the air atmosphere for two hours and calcined at about 500 °C for two hours to form the upper layer.

### Catalyst of Example 1-2

The upper layer 7 has the same composition as the example 1-1 (the solid Zr-Ce composite oxide powder loaded with Rh is arranged over the entire length, the carrying amount of the Zr-Ce composite oxide is 50 g/L, the Rh carrying amount is 0.15 g/L).

The lower layer, as shown in Figure 3, is divided at the center of the honeycomb shaped carrier in the exhaust gas flow direction into the upstream lower layer 6a and the downstream lower layer 6b. In the upstream lower layer 6a, the hollow La containing alumina powder loaded with Pt is arranged which is the same as in the lower layer of the example 1-1. In the downstream lower layer 6b, the solid La containing alumina powder loaded with Pt, which was used as a raw material for the hollow La containing alumina loaded with Pt in the example 1-1, is arranged. The carrying amounts of the lower layers are the same as in the example 1-1, i.e. 50 g/L for the La containing alumina and 0.45 g/L for Pt. A half of each of the amounts of the La containing alumina and Pt is carried in the upstream lower layer 6a and the remaining half is carried in the downstream lower layer.

### Catalyst of Comparative Example 1

The upper layer 7 has the same composition as the example 1-1 (the solid Zr-Ce composite oxide powder loaded with Rh is arranged over the entire length, the Zr-Ce composite oxide carrying amount is 50 g/L, the Rh carrying amount is 0.15 g/L).

In the lower layer over the entire length of the honeycomb shaped carrier 2, the solid La containing alumina powder loaded with Pt, which is same as in the downstream lower layer of the example 1-2, is carried so that the carrying amounts are 50 g/L for the La containing alumina and 0.45 g/L for Pt.

### Catalyst of Example 2-1

In the upper layer 7, as in that of the example 1-1, the solid Zr-Ce composite oxide powder loaded with Rh is arranged over the entire length of the honeycomb shaped carrier 2. Although the Zr-Ce composite oxide carrying amount is 50 g/L which is the same as that of the example 1-1, the Rh carrying amount is 0.1 g/L which differs from the example 1. The mass ratio of ZrO₂/CeO₂ of the Zr-Ce composite oxide is 75/25.

In terms of the lower layer 6, instead of Pt employed in the example 1-1, the example 2-1 adopts Pd as a catalytic metal. In other words, in the lower layer 6 over the entire length of the honeycomb shaped carrier 2, the hollow La containing alumina powder loaded with Pd is arranged. This La containing alumina powder loaded with Pd is prepared by way of the same process as used for the preparation of the hollow La containing alumina powder loaded with Pt of the example 1-1 using the solid La containing alumina powder loaded with Pd. The carrying amounts are 50 g/L for the La containing alumina and 0.9 g/L for Pd. Also, the La/Al molar ratio of the La containing alumina is 5/100.

### Catalyst of Example 2-2

The upper layer 7 has the same composition as the example 2-1 (the solid Zr-Ce composite oxide powder loaded with Rh is arranged over the entire length, the Zr-Ce composite oxide carrying amount is 50 g/L, the Rh carrying amount is 0.1 g/L).

In terms of the lower layer, it is divided into two parts in the same manner as the example 1-2. In its upstream lower layer 6a the hollow La containing alumina powder loaded with Pd is arranged and in the downstream lower layer 6b the above-mentioned solid La containing alumina powder loaded with Pd is arranged. The carrying amounts of the lower layers are the same as the example 2-1, i.e. 50 g/L for the La containing alumina and 0.9 g/L for Pd, and a half amount of each of the La containing alumina and Pd is carried on the upstream lower layer 6a and the remaining half amount is carried on the downstream side lower layer 6b.

### Catalyst of Comparative Example 2

The upper layer 7 has the same composition as the example 2-1 (the solid Zr-Ce composite oxide powder loaded with Rh is arranged over the entire length, the Zr-Ce composite oxide carrying amount is 50 g/L, the Rh carrying amount is 0.1 g/L).

In terms of the lower layer 6, over the entire length of the honeycomb shaped carrier 2, the same solid La containing alumina loaded with Pd as the downstream lower layer 6b of the example 2-2 is carried so that the carrying amounts are 50g/L for the La containing alumina and 0.9 g/L for Pd.

### Catalyst of Example 3-1

The upper layer has a mixture of a solid Zr-Ce composite oxide powder loaded with Rh and a solid La containing alumina powder loaded with Pt over the entire length of the honeycomb shaped carrier 2. The solid Zr-Ce composite oxide powder loaded with Rh is the same as that of the upper layer of example 2-1, the carrying amounts of which are 50 g/L for the Zr-Ce composite oxide and 0.1 g/L for Rh. On the other hand, the solid La containing alumina powder loaded with Pt of the upper layer 7 has a La/Al molar ratio of 5/100, and its carrying amounts are 50 g/L for the La containing alumina and 0.1 g/L for Pt.

The lower layer 6 has the same composition as the example 2-1 (the hollow La containing alumina powder loaded with Pd is arranged over the entire length, the La containing alumina carrying amount is 50 g/L, the Pd carrying amount is 0.9 g/L).

### Catalyst of Example 3-2

The upper layer 7 has the same composition as the example 3-1 (the mixture of a solid Zr-Ce composite oxide powder loaded with Rh and a solid La containing alumina powder loaded with Pt is arranged over the entire length, the Zr-Ce composite oxide carrying amount is 50 g/L, the Rh carrying amount is 0.1 g/L, the La containing alumina carrying amount is 50 g/L, the Pt carrying amount is 0.1 g/L).

The lower layer is divided into two parts in the same manner as the example 1-2. The same hollow La containing alumina powder loaded with Pd as the lower layer of example 3-1 is arranged in the upstream lower layer 6a, and the solid La containing alumina powder loaded with Pd is arranged in the downstream lower layer 6b, as in the lower layer of the example 2-2. The carrying amounts of the lower layer are the same as the example 3-1, i.e. 50 g/L for the La containing alumina and 0.9 g/L. A half amount of each of the La containing alumina and Pd is carried on the upstream lower layer 6a and the remaining half amount is carried on the downstream side lower layer 6b, as in the lower layer of the example 2-2.

### Catalyst of Comparative Example 3

The upper layer 7 has the same composition as the example 3-1 (the mixture of a solid Zr-Ce composite oxide powder loaded with Rh and a solid La containing alumina powder loaded with Pt is arranged over the entire length, the Zr-Ce composite oxide carrying amount is 50 g/L, the Rh carrying amount is 0.1 g/L, the La containing alumina carrying amount is 50 g/L, the Pt carrying amount is 0.1 g/L).

In the lower layer 6 over the entire length of the honeycomb shaped carrier 2, the solid alumina powder loaded with Pd as in the downstream lower layer 6b of the example 3-2 is arranged so that the La containing alumina is 50 g/L and Pd is 0.9 g/L.

### - Evaluation of Catalysts -

For the catalysts of the examples and comparative examples, an aging process is taken which holds the catalysts at 1000 °C for 24 hours in air atmosphere. After the aging the catalysts are attached to a model gas flow reaction apparatus where model gas having a rich air fuel ratio (at a temperature of 600 °C) is flowed for 20 minutes. Then, a light off temperature T50 in terms of HC (hydrocarbon), CO and NOx is measured with a model gas described below. T50 is a gas temperature at an inlet of the catalyst when the purification rate reaches 50% as a temperature of the model gas flowing into the catalyst is gradually raised from a normal temperature or ambient temperature to 500 °C. The model gas has an air/fuel ratio (A/F = 14.7 ± 0.9). That is, the air/fuel ratio is compulsorily oscillated with an amplitude band of ± 0.9 by constantly letting mainstream gas of A/F = 14.7 flow and adding a certain amount of gas for the oscillation at a frequency of 1 Hz. The space velocity (SV) is 60000 h⁻¹ and the temperature increase rate is 30 °C/minute.

The result is shown in Table 1, where "Solid Rh/Zr-Ce-O" means the solid Zr-Ce composite oxide powder loaded with Rh, "Hollow Pt/La-Al₂O₃" means the hollow La containing alumina powder loaded with Pt, "Solid Pt/La-Al₂O₃" means the solid La containing alumina powder loaded with Pt, "Hollow Pd/La-Al₂O₃" means the hollow La containing alumina powder loaded with Pd, "Solid Pd/La-Al₂O₃" means the solid La containing alumina powder loaded with Pd.

**Table 1**

| | | Composition | T50 (°C) | | |
|---|---|---|---|---|---|
| | Layer | | HC | CO | NOx |
| Example 1-1 | Upper | Solid Rh/Zr-Ce-O | 342 | 337 | 348 |
| | Lower | Hollow Pt/La-Al₂O₃ | | | |
| Example 1-2 | Upper | Solid Rh/Zr-Ce-O | 346 | 341 | 351 |
| | Lower | Upstream: Hollow Pt/La- Al₂O₃ Downstream: Solid Pt/La- Al₂O₃ | | | |
| Comparative Example 1 | Upper | Solid Rh/Zr-Ce-O | 354 | 349 | 356 |
| | Lower | Solid Pt/La- Al₂O₃ | | | |
| Example 2-1 | Upper | Solid Rh/Zr-Ce-O | 314 | 306 | 318 |
| | Lower | Hollow Pd/La- Al₂O₃ | | | |
| Example 2-2 | Upper | Solid Rh/Zr-Ce-O | 319 | 310 | 322 |
| | Lower | Upstream: Hollow Pd/La- Al₂O₃ Downstream: Solid Pd/La- Al₂O₃ | | | |
| Comparative Example 2 | Upper | Solid Rh/Zr-Ce-O | 328 | 316 | 334 |
| | Lower | Solid Pd/La- Al₂O₃ | | | |
| Example 3-1 | Upper | Solid Rh/Zr-Ce-O and Solid Pd/La-Al₂O₃ | 308 | 300 | 315 |
| | Lower | Hollow Pd/La- Al₂O₃ | | | |
| Example 3-2 | Upper | Solid Rh/Zr-Ce-O and Solid Pd/La-Al₂O₃ | 312 | 303 | 321 |
| | Lower | Upstream: Hollow Pd/La- Al₂O₃ Downstream: Solid Pd/La- Al₂O₃ | | | |
| Comparative Example 3 | Upper | Solid Rh/Zr-Ce-O and Solid Pd/La-Al₂O₃ | 320 | 310 | 329 |
| | Lower | Solid Pd/La- Al₂O₃ | | | |

Comparing T50s for the example 1-1, example 1-2 and comparative example 1, in terms of any T50s for HC, CO and NOx, those for the examples 1-1 and 1-2 are lower than those for the comparative example 1. Accordingly, it can be seen that by arranging the solid oxide powder loaded with a catalytic metal in the upper layer 7 and the hollow oxide powder loaded with a catalytic metal in the lower layer 6 an improvement of the light off performance of the catalyst can be obtained.

One of the reasons of the improved light off performance is considered that the upper layer 7 is more likely to receive heat from the exhaust gas to raise its temperature because it is solid not hollow and that a quick temperature rise of the upper layer can be obtained because the heat insulation effect of a hollow oxide powder of lower layer 6 prevents the heat transmission from the upper layer 7 to the honeycomb shaped carrier 2.

Also since the Zr-Ce composite oxide loaded with Rh of the upper layer 7 promotes steam reforming reaction or partial oxidation reaction of HC, thereby generated a more active decomposed product such as H₂ and a partially oxidized HC is supplied to the lower layer 6, which improves the catalytic reactivity of the La containing alumina loaded with Pt of the lower layer 6.

Another reason for the improved light off performance of the examples is considered that the above-mentioned decomposed product is diffused in the lower layer 6. That is, since this decomposed product is smaller in size, it can more easily pass through the shell wall of the hollow oxide powder. Also the lower layer has a larger pore volume because of the hollow oxide powder which causes that the above-mentioned decomposed product more easily diffuses. Therefore, it can be seen that in the catalysts according to the examples the catalytic metal in the lower layer 6 is effectively utilized for exhaust gas purification and the light off performance is improved.

The example 1-2 has the hollow oxide powder in the upstream lower layer 6a and the solid oxide powder in the downstream lower layer 6b. In this case, since it shows better results than the comparative example 1 even though the result is a little bit worse than the example 1-1 having the hollow oxide powder in the whole lower layer, it can be seen that the hollow oxide powder has the above-mentioned effect even if just arranged in the upstream lower layer 6a.

The above points are proven by way of comparison between the example 2-1, the example 2-2 and the comparative example 2 as well as a comparison between the example 3-1, the example 3-2 and the comparative example 3.

The example 2-1, the example 2-2 and the comparative example 2 adopt Pd as catalytic metal in the lower layer instead of Pt, and have better results respectively than the example 1-1, the example 1-2 and the comparative example 1. Accordingly, it can be seen that the effect of the above-mentioned oxide powder appears regardless of the catalytic metal elements and further that Pd is more advantageous than Pt in terms of improvement of the light off performance. Also, since HC which causes poisoning of Pd is purified or converted into a more reactive partially oxidized HC in the upper layer 7, the poisoning of Pd in the lower layer 6 is prevented.

The example 3-1, the example 3-2 and the comparative example 3 have a mixture of the solid La containing alumina powder loaded with Pt with the solid Zr-Ce composite oxide powder loaded with Rh as in the example 2-1, 2-2 and the comparative example 2, in the upper layer 7. They show better results respectively than the example 2-1, the example 2-2 and the comparative example 2. This is considered to be because the oxidation reaction of HC and CO is promoted by the Pt catalyst in the upper layer 7, as a result, the reduction of NOx efficiently proceeds simultaneously, as well as the amount of partially oxidized HC generated from high molecular hydrocarbon in the upper layer is increased to improve the purification reactivity of an exhaust gas at the lower layer 6. Also although when the Rh catalyst in the upper layer 7 is oxidized, its catalytic performance generally deteriorates, in an oxidizing atmosphere the Pt catalyst in the upper layer 7 promotes oxidizing reaction of hydrocarbon and the like, consequently, since the reducing atmosphere is locally made, the oxidation of the Rh catalyst is prevented to be of advantage on the maintenance of its activity.

Although in the above embodiments the alumina based hollow oxide powder is arranged in the lower layer, rather the ceria based hollow powder may be arranged, further both of these hollow oxide powders of alumina based and ceria based may be layered or mixed and arranged in the lower layer. If the ceria based hollow oxide powder is adopted, its higher oxygen storage capacity may improve the activity of a catalyst to improve, or may make window of three way catalyst (air fuel ratio range where the three way catalyst effectively works) wider. Also in the lower layer, the alumina based or ceria based hollow oxide powder loaded with Pd and the alumina or ceria based hollow oxide powder loaded with Pt may be mixed and arranged.

According to the present invention, it is also possible to provide one or more additional layers having e.g. catalytic and/or thermal insulation properties. However, it is preferred to provide the lower catalyst layer directly on the carrier and to provide the upper catalyst layer as the outermost layer which is in contact with the exhaust gas flowing through the exhaust gas passages. In order to ensure an excellent exhaust gas purifying effect, it is particularly preferred that the upper catalyst layer does not contain a hollow oxide powder having thermal insulation properties.

## Claims

1. An exhaust gas purification catalyst converter having a carrier (2) having exhaust gas passages (3) therein, wherein the catalyst converter comprises:
a lower catalyst layer (6) coated over said carrier (2) and comprising sphere shaped hollow shells of oxide powder consisting of a ceria or alumina based oxide or a mixture thereof loaded with a catalytic metal comprising Pt and/or Pd; and
an upper catalyst layer (7) coated over said lower catalyst layer (6), at least partly directly exposed to exhaust gas flowing in said exhaust gas passage (3) and comprising a solid oxide powder loaded with a catalytic metal comprising Rh.

2. The catalyst converter of claim 1, wherein said lower catalyst layer (6) is divided into:
an upstream lower catalyst layer (6a) arranged in a predetermined range from an upstream end of said carrier (2) in an exhaust gas flow direction; and
a downstream lower catalyst layer (6b) arranged downstream of said upstream lower catalyst layer (6a).

3. The catalyst converter of any one of the preceding claims, wherein said hollow oxide powder is a composite oxide.

4. The catalyst converter of claim 3, wherein said composite oxide is a La containing alumina.

5. The catalyst converter of any one of the preceding claims, wherein said solid oxide powder is a ceria or alumina based oxide or a mixture thereof.

6. The catalyst converter of any one of the preceding claims, wherein said solid oxide powder is a composite oxide.

7. The catalyst converter of claim 6, wherein said composite oxide is a Ce-Zr composite oxide.

8. The catalytic converter of any one of the preceding claims, wherein said catalytic metal on solid oxide powder further comprises Pt.

9. The catalytic converter according to anyone of claims 1 to 8, wherein the upper catalyst layer which comprises a solid oxide powder loaded with a catalytic metal does not contain a hollow oxide powder.

10. A process for producing an exhaust gas purification catalyst converter having a carrier (2) having exhaust gas passages (3) therein, comprising the steps of:
(a) providing a carrier (2),
(b) forming a lower catalyst layer (6) which comprises sphere shaped hollow shells of oxide powder consisting of a ceria or alumina based oxide or a mixture thereof loaded with a catalytic metal comprising Pt and/or Pd on said carrier (2),
(c) forming an upper catalyst layer (7) which comprises a solid oxide powder loaded with a catalytic metal comprising Rh on said lower catalyst layer (6) such that the upper catalyst layer (7) is at least partly directly exposed to exhaust gas flowing in said exhaust gas passage (3).

## Patentansprüche

1. Abgasreinigungskatalysatorkonverter mit einem Träger (2) mit Abgasdurchleitungen (3) darin, wobei der Katalysatorkonverter umfaßt:
eine untere Katalysatorschicht (6), beschichtet über dem Träger (2) und umfassend kugelförmige hohle Schalen von Oxidpulver, bestehend aus einem Ceroxid oder Aluminiumoxid-basierenden Oxid oder einem Gemisch davon, beladen mit einem katalytischen Metall, umfassend Pt und/oder Pd, und
eine obere Katalysatorschicht (7), beschichtet über der unteren Katalysatorschicht (6), mindestens teilweise dem Abgas direkt ausgesetzt, welches in den Abgasdurchleitungen (3) strömt, und umfassend ein festes Oxidpulver, beladen mit einem katalytischen Metall, umfassend Rh.

2. Katalysatorkonverter gemäß Anspruch 1, wobei die untere Katalysatorschicht (6) geteilt ist in:
eine stromaufwärtige untere Katalysatorschicht (6a), angeordnet in einem vorbestimmten Bereich von einem stromaufwärtigen Ende des Trägers (2) in einer Abgasströmrichtung, und
eine stromabwärtige untere Katalysatorschicht (6b), angeordnet stromabwärts der stromaufwärtigen unteren Katalysatorschicht (6a).

3. Katalysatorkonverter gemäß einem der vorhergehenden Ansprüche, wobei das hohle Oxidpulver ein Kompositoxid ist.

4. Katalysatorkonverter gemäß Anspruch 3, wobei das Kompositoxid ein La-enthaltendes Aluminiumoxid ist.

5. Katalysatorkonverter gemäß einem der vorhergehenden Ansprüche, wobei das feste Oxidpulver ein Ceroxid- oder Aluminiumoxid-basierendes Oxid oder ein Gemisch davon ist.

6. Katalysatorkonverter gemäß einem der vorhergehenden Ansprüche, wobei das feste Oxidpulver ein Kompositoxid ist.

7. Katalysatorkonverter gemäß Anspruch 6, wobei das Kompositoxid ein Cer-Zr-Kompositoxid ist.

8. Katalysatorkonverter gemäß einem der vorhergehenden Ansprüche, wobei das katalytische Metall auf dem festen Oxidpulver weiter Pt umfaßt.

9. Katalysatorkonverter gemäß einem der Ansprüche 1 bis 8, wobei die obere Katalysatorschicht, welche ein festes Oxidpulver beladen mit einem katalytischen Metall umfaßt, kein hohlförmiges Oxidpulver enthält.

10. Verfahren zur Herstellung eines Abgasreinigungskatalysatorkonverters mit einem Träger (2) mit Abgasdurchleitungen (3) darin, umfassend die Schritte:
a) das Bereitstellen eines Trägers (2),
b) das Bilden einer unteren Katalysatorschicht (6), welche kugelförmige hohle Schalen von Oxidpulver, bestehend aus einem Ceroxid- oder Aluminiumoxid-basierenden Oxid oder einem Gemisch davon, beladen mit einem katalytischen Metall, umfassend Pt und/oder Pd auf dem Träger (2), umfaßt,
c) das Bilden einer oberen Katalysatorschicht (7), welche ein festes Oxidpulver beladen mit einem katalytischen Metall, umfassend Rh, auf der unteren Katalysatorschicht (6) derart, daß die obere Katalysatorschicht (7) mindestens teilweise direkt dem Abgas, welches in der Abgasleitung (3) strömt, ausgesetzt ist, umfaßt.

## Revendications

1. Convertisseur catalytique de purification de gaz d'échappement comportant un support (2) dans lequel se trouvent des passages pour gaz d'échappement (3), le convertisseur catalytique comprenant :
une couche catalytique inférieure (6) enduite sur ledit support (2) et comprenant des coques creuses d'oxyde pulvérulent en forme de sphère constituées d'un oxyde à base d'oxyde de cérium ou d'alumine ou d'un de leurs mélanges chargé avec un métal catalytique comprenant Pt et/ou Pd ; et
une couche catalytique supérieure (7) enduite sur ladite couche catalytique inférieure (6), au moins partiellement exposée directement au gaz d'échappement s'écoulant dans ledit passage pour gaz d'échappement (3) et comprenant un oxyde solide pulvérulent chargé avec un métal catalytique comprenant Rh.

2. Convertisseur catalytique selon la revendication 1, dans lequel ladite couche catalytique inférieure (6) est divisés :
en une couche catalytique inférieure amont (6a) disposée à une distance prédéterminée par rapport à une extrémité amont dudit support (2) dans une direction d'écoulement de gaz d'échappement ; et
en une couche catalytique inférieure aval (6b) disposée en aval de ladite couche catalytique inférieure amont (6a).

3. Convertisseur catalytique selon l'une quelconque des revendications précédentes, dans lequel ledit oxyde creux pulvérulent est un oxyde composite.

4. Convertisseur catalytique selon la revendication 3, dans lequel ledit oxyde composite est une alumine contenant La.

5. Convertisseur catalytique selon l'une quelconque des revendications précédentes, dans lequel ledit oxyde solide pulvérulent est un oxyde à base d'oxyde de cérium ou d'alumine ou d'un de leurs mélanges.

6. Convertisseur catalytique selon l'une quelconque des revendications précédentes, dans lequel ledit oxyde solide pulvérulent est un oxyde composite.

7. Convertisseur catalytique selon la revendication 6, dans lequel ledit oxyde composite est un oxyde composite Ce-Zr.

8. Convertisseur catalytique selon l'une quelconque des revendications précédentes, dans lequel ledit métal catalytique sur l'oxyde de solide pulvérulent comprend Pt.

9. Convertisseur catalytique selon l'une quelconque des revendications 1 à 8, dans lequel la couche catalytique supérieure qui comprend un oxyde solide pulvérulent chargé avec un métal catalytique ne contient pas un oxyde creux pulvérulent.

10. Procédé de production d'un convertisseur catalytique de purification de gaz d'échappement comportant un support (2) dans lequel se trouvent des passages pour gaz d'échappement (3), comprenant les étapes suivantes :
(a) l'obtention d'un support (2),
(b) la formation d'une couche catalytique inférieure (6) qui comprend des coques creuses d'oxyde pulvérulent en forme de sphère constituées d'un oxyde à base d'oxyde de cérium ou d'alumine ou d'un de leurs mélanges chargé avec un métal catalytique comprenant Pt et/ou Pd sur ledit support (2),
(c) la formation d'une couche catalytique supérieure (7) qui comprend un oxyde solide pulvérulent chargé avec un métal catalytique comprenant Rh sur ladite couche catalytique inférieure (6), de manière à ce que la couche catalytique supérieure (7) soit au moins partiellement exposée directement au gaz d'échappement s'écoulant dans ledit passage pour gaz d'échappement (3).
